# EUROPÄISCHE PATENTSCHRIFT

(11) **EP 0 943 472 B1**
(45) Veröffentlichungstag und Bekanntmachung des Hinweises auf die Patenterteilung: **08.01.2003**
(21) Anmeldenummer: 99102585.9
(22) Anmeldetag: 11.02.1999
(51) Int. Cl.: B60J 1/18, B60J 7/04

(54) **Personenkraftwagen**
Passenger vehicle
Véhicule de passagers

(30) Priorität: 18.03.1998 DE 19811814
(43) Veröffentlichungstag der Anmeldung: 22.09.1999
(73) Patentinhaber: Bayerische Motoren Werke Aktiengesellschaft, 80788 München (DE)
(72) Erfinder: Schuster, Gerd, Dr., 85764 Oberschleissheim (DE); Siring, Harald, 81377 München (DE)

(56) Entgegenhaltungen:
- DE-A- 3 616 017
- DE-C- 19 631 213
- US-A- 3 567 209
- US-A- 5 078 447

## Beschreibung

Die Erfindung betrifft einen Personenkraftwagen mit einem Fließheckscheibenteit, das gemeinsam mit einem dieses führende Rahmenteil um eine im Fahrzeug-Heckbereich quer zur Fahrzeug-Längsachse verlaufende Schwenkachse in den Fahrzeug-Innenraum hinein verschwenkbar ist, sowie mit einem in Richtung der Fahrzeug-Längsachse verschiebbaren Dachteil, welches in das Rahmenteil einführbar und mit dem Fließheckscheibenteil zumindest im wesentlichen in Überdeckung bringbar und in diesem Zustand in den Fahrzeug-Innenraum mitverschwenkbar ist. Ein Kraftwagen dieser Art ist in DE 36 16 077 offenbart.
Zum technischen Umfeld wird ferner neben der DE 38 43 675 A1 und der DE 36 02 298 C2 insbesondere auf die DE 43 41 343 A1 verwiesen.

Ein Personenkraftwagen nach dem Oberbegriff des Anspruchs 1, wie er aus der letztgenannten Schrift bekannt ist, zeichnet sich durch große Flexibilität hinsichtlich der realisierbaren Karosserieform aus. Neben einem Coupé, dessen verschiebbares, bevorzugt großflächiges Dachteil so weit nach hinten, bevorzugt über das sogenannte Fließheckscheibenteil geschoben werden kann, daß man die sogenannte "Targa"-Version eines Coupés erhält, kann der Fahrzeugnutzer auch eine Karosserieform herstellen, die dem eines Cabriolets ähnlich ist. Hierzu wird das über das Fließheckscheibenteil gefahrene Dachteil gemeinsam mit dem Fließheckscheibenteil um eine im Heckbereich des Fahrzeuges quer zur Fahrzeuglängsachse verlaufende Schwenkachse quasi in den Innenraum des Fahrzeuges hinein verschwenkt. Dann liegen das Heckscheibenteil sowie das darüberliegende Dachteil im wesentlichen in Brüstungshöhe des Personenkraftwagens parallel hierzu. Diese Karosserieform wird im folgenden als "Quasi-Cabriolet" bezeichnet.

Maßnahmen aufzuzeigen, mit Hilfe derer die Funktionalität eines derartigen Personenkraftwagens noch weiter gesteigert werden kann, ist Aufgabe der vorliegenden Erfindung.
Die Lösung dieser Aufgabe ist dadurch gekennzeichnet, daß das Fließheckscheibenteil im nicht verschwenkten Zustand zumindest teilweise aus dem Rahmenteil heraus in Richtung der Fahrzeug-Längsachse verschiebbar ist und hierbei mit dem Dachteil zumindest teilweise in Überdeckung gelangt.

Vorteilhafte Aus- und Weiterbildungen sind Inhalt der Unteransprüche. Bevorzugt können das Fließheckscheibenteil und das Dachteil durch Hilfsmotoren bewegt werden, wobei eine Steuereinheit vorgesehen ist, die die Positionierung der genannten bewegbaren Fahrzeug-Teile auf ihre Bewegungsfreiheit hin überwacht. Dabei kann der Steuereinheit vorgebbar sein, welche gemeinsamen Endpositionen der genannten bewegbaren Fahrzeug-Teile erreicht werden sollen.

Mit den kennzeichnenden Merkmalen des Anspruchs 1 ist ein erfindungsgemäßer Personenkraftwagen zusätzlich zu den eingangs genannten Karosserieformen, nämlich zusätzlich zu einem Coupé, einer sogenannten "Targa-Version" sowie einem "Quasi-Cabriolet" noch in einen sogenannten "Pick-Up" verwandelbar. Mit diesem Begriff werden üblicherweise mit Personenkraftwagen vergleichbare Kraftfahrzeuge bezeichnet, die in ihrem Heckbereich eine nach oben hin offene Ladefläche besitzen. Genau dies liegt nun auch bei einem erfindungsgemäßen Multifunktions-Personenkraftwagen vor, wenn das Fließheckscheibenteil aus seiner üblichen Coupé-Position heraus nach vorne unter oder über das Dachteil verschoben wird. Dann kann in den Heckbereich des Personenkraftwagens auch ein sperriger hoher Gegenstand, der dann über die Fahrzeugoberkante hinausragt, eingeladen werden. Dabei ist eine ähnliche derartige Gestaltung grundsätzlich aus der oben bereits genannten DE 38 43 675 A1 bekannt.

Wie in der gattungsbildenden DE 43 41 343 A1 bereits beschrieben, ist zur Erzielung einer selbsttragenden Karosseriestruktur bei gleichzeitiger Ermöglichung der vorteilhaften Verschwenkbewegung von Fließheckscheibenteil und Dachteil in den Fahrzeuginnenraum hinein ein sogenanntes Rahmenteil vorgesehen, welches auch als Schwenkrahmen bezeichnet werden kann. Durch dieses um die genannte Schwenkachse im Heckbereich des Fahrzeuges verschwenkbare Rahmenteil wird dabei das Fließheckscheibenteil sowie das Dachteil zumindest bei der Verschwenkbewegung geführt. Hierzu ist das Dachteil, welches sich im geschlossenen Coupé-Zustand des Personenkraftwagens außerhalb des Rahmenteiles im vorderen Bereich des Fahrzeugdaches befindet, in dieses Rahmenteil, welches bevorzugt auch in der Coupé-Version das Fließheckscheibenteil führt, einführbar. Soll hingegen der Personenkraftwagen in seine sogenannte "Pick-Up-Version" überführt werden, so wird das Fließheckscheibenteil zumindest teilweise aus dem besagten Rahmenteil/Schwenkrahmen herausgeführt, um - hierbei nach vorne geschoben werdend - mit dem sich in seiner geschlossenen Position befindenden Dachteil zumindest teilweise in Überdeckung gebracht zu werden.

Wie an heutigen Personenkraftwagen üblich, werden die genannten bewegbaren Fahrzeug-Teile, nämlich das Fließheckscheibenteil, das Dachteil sowie das Rahmenteil durch bevorzugt elektrische Hilfsmotoren bewegt. Hierfür wird nun eine bevorzugt elektronische Steuereinheit vorgeschlagen, welche die Positionierung dieser bewegbaren Fahrzeug-Teile auf ihre Bewegungsfreiheit hin überwacht. Dies bedeutet, daß beispielsweise das Rahmenteil so lange nicht verschwenkt werden kann, als sich das Dachteil beispielsweise lediglich mit seiner hinteren Hälfte im Rahmenteil befindet, mit seiner vorderen Hälfte jedoch noch im üblichen Karosserie-Seitenrahmen geführt ist. Gleiches gilt, wenn sich das Fließheckscheibenteil noch teilweise im Rahmenteil, teilweise jedoch bereits auch unterhalb des geschlossenen Dachteiles und somit im starren Seitenrahmen der Fahrzeugkarosserie befindet. Um somit Fehlbedienungen durch den Fahrzeugnutzer zu verhindern, läßt die Steuereinheit nur solche Bewegungen der bewegbaren Fahrzeug-Teile zu, welche kollisionsfrei ausgeführt werden können.

Wie bereits in der gattungsbildenden DE 43 41 343 A1 beschrieben, kann die Rücksitzbank (oder auch nur ein Bestandteil derselben) unterschiedlich positionierbar sein, um einen ausreichenden Freiraum für ein Verschwenken des Rahmenteils (zusammen mit dem Fließheckscheibenteil) in den Fahrzeug-Innenraum zu schaffen. Bevorzugt kann hierfür die Rückenlehne der Rücksitzbank in Fahrtrichtung des Personenkraftwagens sowie in Richtung der Fahrzeug-Längsachse zu den Vordersitzen hin verschoben werden. In diesem Zusammenhang kann die besagte Steuereinheit auch die Positionierung der Rücksitzbank oder des verschiebbaren Bestandteiles hiervon auf Bewegungsfreiheit hin überwachen. Wird die Verschiebung der Rückenlehne der Rücksitzbank benötigt, um den Schwenkrahmen mit dem Fließheckscheibenteil überhaupt in den Fahrzeug-Innenraum hinein verschwenken zu können, so sollte diese Verschwenkbewegung auch erst dann möglich sein, wenn zuvor die Rückenlehne der Rücksitzbank ausgehend von ihrer Normalposition in die nach vorne geschobene Position direkt hinter den Vordersitzen gebracht wurde. Die Steuereinheit kann jedoch auch überwachen, ob eine Verschiebung der Rückenlehne oder eines anderen Bestandteiles der Rücksitzbank überhaupt möglich ist, beispielsweise unter Rückgriff auf die Signale einer geeigneten Sitzbelegungserkennung.

Für einen Nutzer eines erfindungsgemäßen Personenkraftwagens ergibt sich ein größtmöglicher Bedienkomfort, wenn er der Steuereinheit vorgeben kann, welche Endposition bzw. gemeinsamen Endpositionen der bewegbaren Fahrzeug-Teile (Fließheckscheibenteil, Rahmenteil, Dachteil, Rücksitzbank oder Bestandteil derselben) erreicht werden soll/sollen. De facto existieren nämlich vier wesentliche derartige Endpositionen. In einer ersten Stellung ist der Personenkraftwagen geschlossen und stellt somit ein Coupé dar, wobei sich das Dachteil in seiner vorderen geschlossenen Position befindet und auch das Fließheckscheibenteil nicht abgesenkt ist. Eine zweite bevorzugte Endposition ist die sogenannte "Pick-Up-Version", in welcher - wie bereits erläutert- das Fließheckscheibenteil mit dem weiterhin in seiner vorderen geschlossenen Position verbleibenden Dachteil in Überdeckung gebracht wird und in welcher die Rückenlehne der Rücksitzbank in ihre vordere Position gebracht wird, so daß ein größtmöglicher von oben frei zugänglicher Laderaum zur Verfügung steht. Die dritte bevorzugte Endposition ist die sogenannte "Quasi-Cabriolet-Version", in der das Dachteil mit dem hinten verbliebenen Fließheckscheibenteil in Überdeckung gebracht wurde und diese gemeinsam mit dem Rahmenteil in den Fahrzeug-Innenraum hinein verschwenkt wurden. Die vierte bevorzugte Endposition schließlich ist die sogenannte "Targa-Version", in welcher das Fließheckscheibenteil wieder die gleiche Position wie in der Coupé-Version einnimmt, das Dachteil hingegen im wesentlichen vollständig geöffnet ist, d.h. sich mit dem nicht in den Innenraum verschwenkten Fließheckscheibenteil in Überdeckung befindet.

Sowohl in der letztgenannten Endposition als auch in der sogenannten Coupé-Position kann das Dachteil dabei Zwischenstellungen einnehmen, d. h. mehr oder weniger geöffnet sein bzw. die Dachöffnung des Personenkraftwagens mehr oder weniger freigeben. Dabei kann die verschiebbare Rükkenlehne der Rücksitzbank in all denjenigen Zuständen, in denen das Rahmenteil mit dem Fließheckscheiben nicht in den Innenraum hinein abgesenkt wurde, auch in die vordere sich direkt an die Vordersitze anschließende Position gebracht werden, um einen größeren Laderaum zu schaffen. Durch eine geeignete Ansteuerungslogik bzw. durch eine geeignete Gestaltung von Bedienelementen bzw. Schaltern kann dabei gewährleistet werden, daß der Fahrzeugnutzer einige der genannten bewegbaren Fahrzeug-Teile wie gewünscht individuell einstellen kann, während in gewissen Zuständen die Positionen der diversen bewegbaren Fahrzeugteile von der Steuereinheit zwangsläufig vorgegeben wird, so insbesondere zum Erreichen der sogenannten "Quasi-Cabriolet-Version".

Im übrigen kann die Rücksitzbank neben der verschiebbaren Rückenlehne noch weitere verschiebbare Bestandteile aufweisen, so insbesondere eine versenkbare Kopfstützvorrichtung. Diese Kopfstützvorrichtung kann dabei in verschiedenen Positionen der Rückenlehne bzw. in verschiedenen Versionen des Personenkraftwagens (Coupé, Pick-Up, Targa, Quasi-Cabriolet) verschiedene Positionen einnehmen. Dies ist insbesondere dann von Vorteil, wenn diese Kopfstützvorrichtung bei geeigneter Gestaltung gleichzeitig weitere Funktionen übernimmt, so beispielsweise die eines sogenannten, dem Fachmann bekannten Windschotts und/oder die einer Trennwand zum hinter der Rückenlehne liegenden Gepäckraumabteil. So kann es beispielsweise gewünscht sein, die Kopfstützvorrichtung in der sogenannten Quasi-Cabriolet-Version weiter aus der Rückenlehne herauszufahren als in der Coupé-Version, da sie in der erstgenannten Version als Windschott wirkt und somit eine größere Fläche abdecken muß als in der zweitgenannten Version, in welcher sie im übrigen in der vollständig aus der Rückenlehne herausgefahrenen Position mit dem Fahrzeugdach bzw. insbesondere dem Fließheckscheibenteil kollidieren könnte. In wieder anderen Anwendungsfällen kann es gewünscht sein, die Kopfstützvorrichtung vollständig in der Rükkenlehne zu versenken.

Ein erfindungsgemäßer Personenkraftwagen kann weiterhin - wie bereits in der gattungsbildenden DE 43 41 343 A1 erwähnt - eine unten angeschlagene und somit nach außen sowie nach unten hin verschwenkbare Heckklappe aufweisen, wie sie auch an den bekannten Pick-Up-Fahrzeugen üblich ist. In der geschlossenen Position des Fließheckscheibenteiles wirkt diese Heckklappe in ihrer Schließposition mit diesem zusammen, d.h. sie verschließt den Fahrzeug-Innenraum nach außen bzw. nach hinten hin. Im Hinblick auf eine optimale Bedienbarkeit für den Nutzer des Personenkraftwagens kann dabei im Bereich dieser - der Einfachheit halber bevorzugt manuell betätigbaren - Heckklappe eine Betätigungsvorrichtung vorgesehen sein, mit welcher der Steuereinheit zumindest einer der möglichen Positionen oder der genannten Endpositionen der bewegbaren Fahrzeug-Teile vorgebbar ist. Der Fahrzeug-Nutzer kann somit beispielsweise hinter dem Fahrzeug stehend von außen die Heckklappe öffnen und mit der Betätigungsvorrichtung die Rückenlehne der Rücksitzbank nach vorne verfahren lassen, um einen vergrößerten Laderaum zu erzielen. Dabei überwacht die Steuereinheit selbstverständlich wieder die Bewegungsfreiheit der bewegbaren Fahrzeug-Teile und positioniert diese (bspw. die Kopfstützvorrichtung) ggf. wie erforderlich.

Ebenfalls zur Vergrößerung des Bedienkomforts können diese bewegbaren Fahrzeug-Teile aber auch mit einer Fernbedienung in Bewegung gesetzt werden, mit welcher der Fahrzeugnutzer der bereits genannten Steuereinheit seine Wünsche übermittelt.

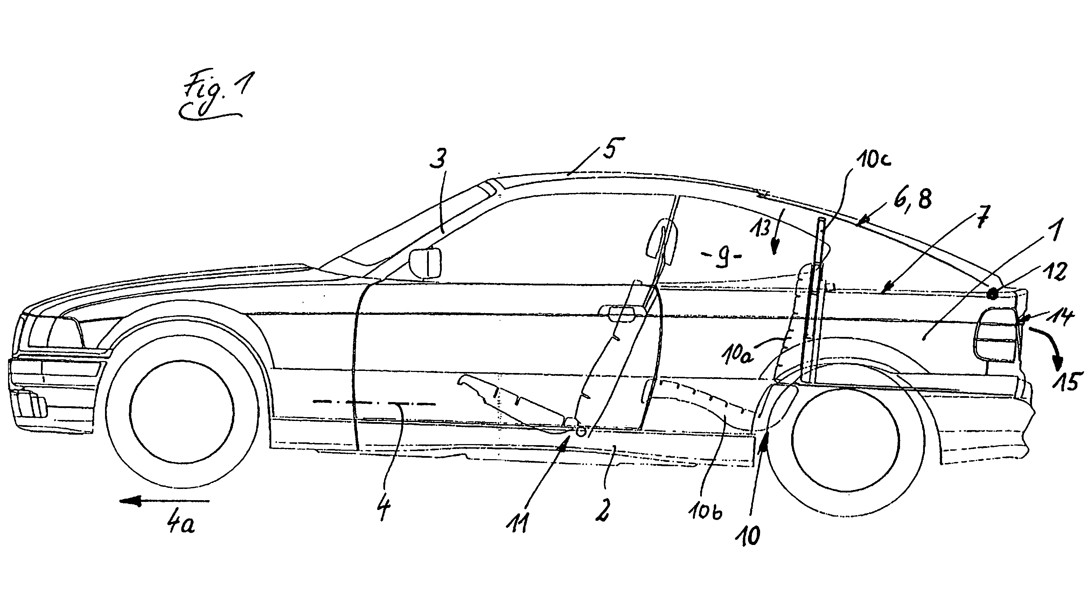

Ein bevorzugtes Ausführungsbeispiel der Erfindung ist in den beigefügten Figuren 1 bis 4 gezeigt, welche im folgenden näher erläutert werden. In diesen Figuren ist ein erfindungsgemäßer Personenkraftwagen in seinen verschiedenen bereits erwähnten Versionen bzw. Karosserieformen dargestellt. Dabei zeigt
- Figur 1: die sogenannte Coupé-Version.
- Figur 2: die sogenannte "Targa-Version'',
- Figur 3: die "Pick-Up-Version" und
- Figur 4: die "Quasi-Cabriolet-Version".

Mit der Bezugsziffer 1 ist der Seitenrahmen eines erfindungsgemäßen Personenkraftwagens bezeichnet, der im wesentlichen wie bei einem Coupé üblich ausgebildet sein kann. Es handelt sich somit um einen zweitürigen Personenkraftwagen, welcher einen nicht bezeichneten Türausschnitt für die Einstiegstüre aufweist. Weitere übliche Elemente sind unter anderem der Türschweller 2 sowie die A-Säule 3.

Im Seitenrahmen 1 in Richtung der Fahrzeug-Längsachse 4 verschiebbar geführt ist ein Dachteil 5. Im geschlossenen Zustand liegt dieses Dachteil 5 mit seiner Vorderkante wie üblich im oberen Endbereich der A-Säule 3.

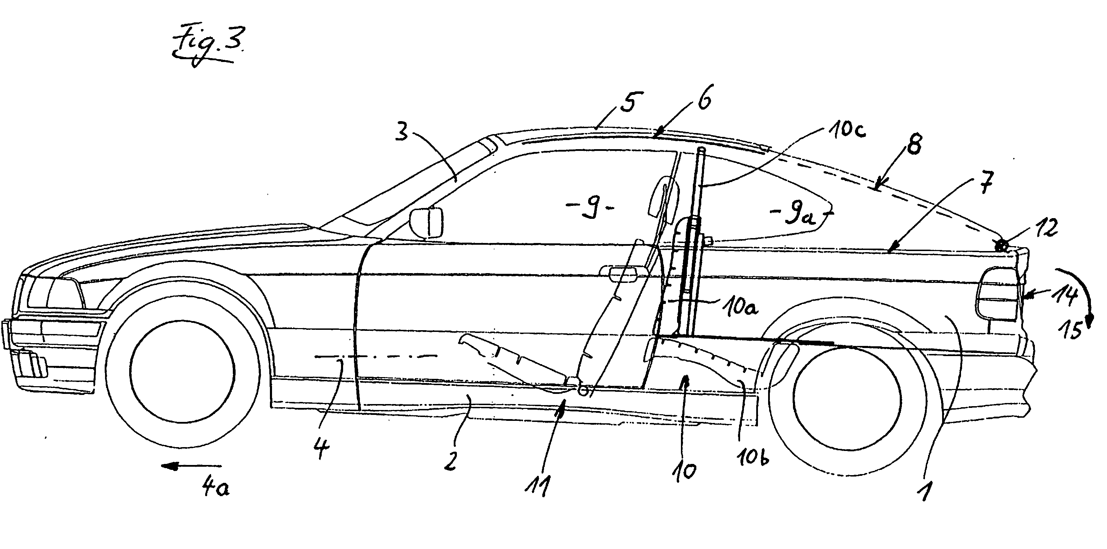

In diesem Zustand des Dachteiles 5 schließt sich an dessen Hinterkante ein sogenanntes Fließheckscheibenteil 6 an, welches sich - wie an sich noch üblich - zwischen dem linken Seitenrahmen 1 und dem rechten Seitenrahmen 1 des Personenkraftwagens befindet und sich in etwa bis zur sogenannten Brüstung 7 des Personenkraftwagens hin erstreckt. Dieses Fließheckscheibenteil 6 enthält dabei eine Heckscheibe und ist in einem nur bruchstückhaft dargestellten Rahmenteil 8 in Richtung der Fahrzeug-Längsachse 4 verschiebbar geführt. Dieses Fließheckscheibenteil 6 kann somit ausgehend von der in Figur 1 gezeigten und dabei den Personenkraftwagen in dessen hinterem Bereich nach oben hin abschießenden Position in Fahrtrichtung 4a des Personenkraftwagens nach vorne verschoben und dabei mit dem (seine geschlossene Position einnehmenden) Dachteil 5 zumindest teilweise, bevorzugt jedoch im wesentlichen vollständig in Überdeckung gebracht werden. In diesem Zustand, bei welchem dann das Fließheckscheibenteil 6 zumindest teilweise, bevorzugt jedoch im wesentlichen vollständig aus dem Rahmenteil 8 herausgeschoben ist, wird das Fließheckscheibenteil 6 seitlich auf nicht näher dargestellte Weise letztendlich vom Seitenrahmen 1 geführt, wobei diese Position des Fließheckscheibenteils in Figur 3 dargestellt ist.

In diesem Zustand nach Fig.3 stellt der Personenkraftwagen ein grundsätzlich bekanntes sog. "Pick-up-Fahrzeug" dar, in dessen sich hinter der Rükkenlehne 10a der Rücksitzbank 10 (hierauf wird an späterer Stelle noch näher eingegangen) befindenden Laderaum 9a, der Bestandteil des Fahrzeuginnenraumes 9 ist, von oben her ein isnbesondere auch sperriges Ladegut eingebracht werden kann, so wie dies bspw. in der bereits genannten DE 38 43 675 A1 gezeigt ist.

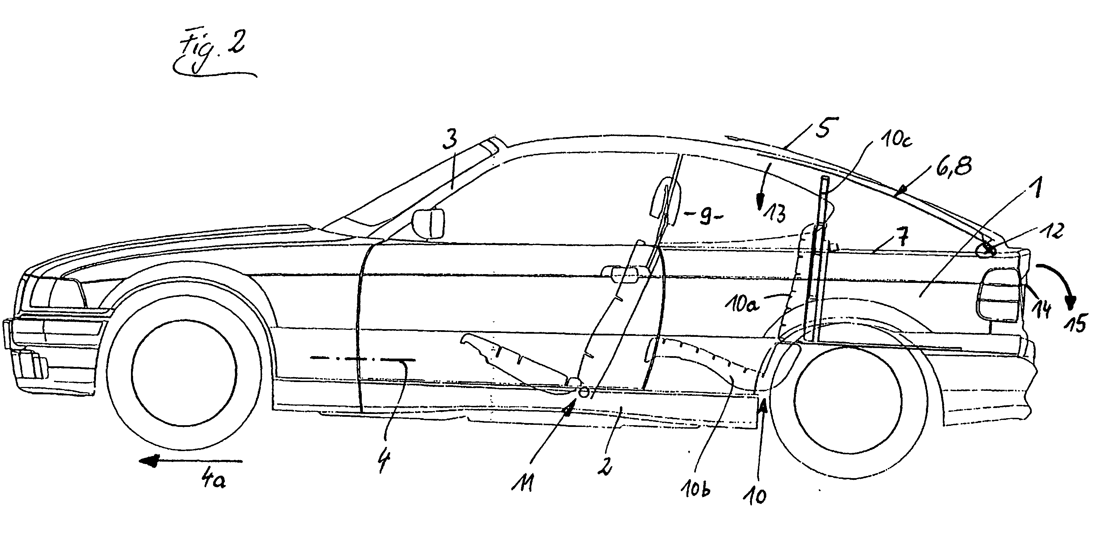

Beim erfindungsgemäßen Personenkraftwagen ist nun aber nicht nur das Fließheckscheibenteil 6, sondern auch das Dachteil 5 in Richtung der Fahrzeug-Längsachse 4 verschiebbar, wobei das letztgenannte durch Verschiebung gegen Fahrtrichtung 4a mit dem Fließheckscheibenteil 6 im wesentlichen in Überdeckung bringbar ist. Diese Position des Dachteiles 5 ist in Figur 2 dargestellt, wobei das Dachteil 5 in das Rahmenteil 8 eingeführt ist und somit durch dieses geführt wird.

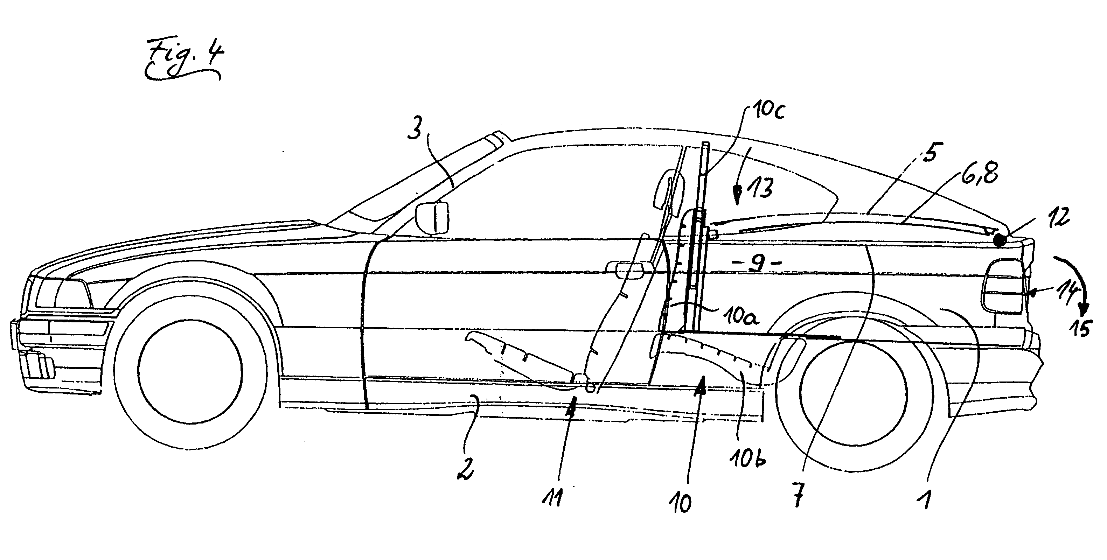

Ausgehend von dieser in Figur 2 dargestellten Position der bislang genannten bewegbaren Fahrzeug-Teile, nämlich des Dachteiles 5 sowie des Fließheckscheibenteiles 6, kann nun durch Verschwenken der durch diese beiden Fahrzeug-Teile gebildeten Einheit gemäß Pfeilrichtung 13 in den Fahrzeug-Innenraum 9 hinein eine weiterere Karosserieform bzw. eine weitere Version des erfindungsgemäßen Personenkraftwagens hergestellt werden, welche in Figur 4 dargestellt ist. Um diese Version nach Fig. 4 erreichen zu können, muß jedoch zunächst ein weiteres bewegbares Fahrzeug-Teil andersartig positioniert werden, nämlich die Rückenlehne 10a der Rücksitzbank 10. Deshalb wird im folgenden zunächst die relevante Innenausstattung des Fahrzeug-Innenraums 9 näher beschrieben, ehe auf die bereits angedeutete Verschwenkbewegung von Dachteil 5 und Fließheckscheibenteil 6 eingegangen wird.

Beim beschriebenen Personenkraftwagen handelt es sich grundsätzlich um ein viersitziges Coupé, was im Zusammenhang mit Figur 1 bereits kurz erwähnt wurde. Demzufolge ist im Innenraum 9 hinter zwei nebeneinander angeordneten Vordersitzen 11 eine Rücksitzbank 10 vorgesehen, die neben einem Sitzpolster 10 b eine Rückenlehne 10a aufweist. In dieser Rückenlehne 10a ist eine Kopfstützvorrichtung 10c derart bewegbar angeordnet, daß die Kopfstützvorrichtung 10c zumindest teilweise in die Rückenlehne 10a versenkbar ist. Auch die Rückenlehne 10a ist ausgehend von ihrer Gebrauchsposition nach Figur 1 verschiebbar, und zwar in Richtung der Fahrzeuglängsachse 4 bzw. in Fahrtrichtung 4a. Die Rückenlehne 10a kann somit ausgehend von der in den Figuren 1, 2 dargestellten Position in die in den Figuren 3, 4 dargestellte Position verschoben werden, in welcher sie sich direkt hinter den Vordersitzen 11 befindet. Hierdurch wird beispielsweise beim bereits kurz erläuterten Zustand nach Figur 3 der hinter der Rückenlehne 10a liegende Laderaum 9a vergrößert, d. h. ausgehend von der in Figur 1 dargestellten Position wird ein Teil des Innenraumes 9 zusätzlich zum Laderaum 9a umgewandelt.

Mit diesem gemäß den Figuren 3, 4 vergrößerten Laderaum 9a ist es nun möglich, die Einheit von Dachteil 5 und Fließheckscheibenteil 6, welche beide - wie bereits erläutert - in diesem Zustand im Rahmenteil 8 geführt sind, um eine Schwenkachse 12 gemäß Pfeilrichtung 13 in den Fahrzeug-Innenraum 9 bzw. in den Laderaum 9a desselben hineinzuverschwenken. Die Schwenkachse 12 verläuft dabei quer zur Fahrzeug-Längsachse 4 im Heckbereich des erfindungsgemäßen Personenkraftwagens, d. h. sie steht senkrecht zur Zeichenebene gemäß Figur 4. Dieser Zustand nach Figur 4 vermittelt den auf den Vordersitzen 11 sitzenden Fahrzeuginsassen ein offenes, besonders freies Fahrgefühl, wie es ansonsten nur bei Cabriolets erzielbar ist, weshalb dieser Zustand als "Quasi-Cabriolet-Version" bezeichnet wird.

Wie eingangs bereits erläutert, werden sämtliche der bislang genannten bewegbaren Fahrzeug-Teile, nämlich das Fließheckscheibenteil 6, das Rahmenteil 8, das Dachteil 5, die Rückenlehne 10a sowie die Kopfstützvorrichtung 10c durch bevorzugt elektrische Hilfsmotoren (nicht gezeigt) bewegt. Wie bereits erläutert, sind dabei diverse Bewegungsabläufe nur möglich, wenn andere gewisse Bewegungsabläufe vorgeschaltet sind, d.h. um ausgehend von der Version nach Figur 2 diejenige nach Figur 4 erhalten zu können, muß zunächst die Rückenlehne 10a gemäß Fahrtrichtung 4a nach vorne geschoben werden. Daher ist eine bevorzugt elektronische Steuereinheit vorgesehen, welche die Positionierung der genannten bewegbaren Fahrzeug-Teile auf ihre Bewegungsfreiheit hin überwacht. Diesbezüglich wird auf die obigen Ausführungen verwiesen.

Aus den hier erläuterten Figurendarstellungen ergibt sich im übrigen auch die Notwendigkeit für die gesteuerte Verschiebung der Kopfstützvorrichtung 10c. Diese ist nämlich beim Zustand nach Figur 4, bei welcher sie durch geeignete Ausbildung als Windschott wirkt, um ein größeres Stück aus der Rückenlehne 10a herausgefahren als beim Zustand nach Figur 2, da eine effektive Windschottwirkung eben nur in der Position gemäß Figur 4 erreichbar ist, während in der Position der Rückenlehne 10a nach Figur 2 die Kopfstützvorrichtung 10 in einem derart weit aus der Rückenlehne 10 a herausgefahrenen Zustand mit dem Fließheckscheibenteil 6 kollidieren würde.

In diesem Zusammenhang sei darauf hingewiesen, daß beim hier erläuterten erfindungsgemäßen Personenkraftwagen das Dachteil 5 beim Übergang vom Zustand nach Figur 1 in denjenigen nach Figur 2 über das Fließheckscheibenteil 6 geführt wird, d. h. das Dachteil 5 befindet sich außerhalb bzw. oberhalb des Fließheckscheibenteiles 6. Beim Übergang vom Zustand nach Figur 1 in denjenigen nach Figur 3 wird das Fließheckscheibenteil 6 dann in analoger Weise unter das Dachteil 5 verschoben, d.h. das Fließheckscheibenteil 6 befindet sich dann innerhalb des Personenkraftwagens. Jedoch können diese genannten Verhältnisse auch umgekehrt gestaltet werden. d.h. das Dachteil 5 gelangt beim Einführen in das Rahmenteil 8 unter das Fließheckscheibenteil 6, und letzteres gelangt wenn es in Überdeckung mit dem geschlossenen Dachteil 5 gebracht wird auf die Oberseite desselben.

Nicht näher dargestellt ist eine Heckklappe 14, die sich in sämtlichen Figuren 1-4 in ihrer geschlossenen Position befindet. Jedoch ist auch diese Heckklappe 14 um eine quer zur Fahrzeug-Längsachse 4 verlaufende, nicht dargestellte Schwenkachse verschwenkbar, und zwar ausgehend von der in den Figuren 1 bis 4 gezeigten, mit dem Fließheckscheibenteil 6 zusammenwirkenden und dabei den Innenraum 9 des Personenkraftwagens nach hinten hin verschließenden Position, nach außen sowie unten hin gemäß Pfeil 15 in eine geöffnete Position. Über diese geöffnete Heckklappe 14 kann somit in den Zuständen nach den Figuren 1, 2, 4 der Laderaum 9a mit Ladegut beladen werden. Beim Zustand nach Figur 3 hingegen kann - wie bereits erläutert - das Ladegut auch direkt von oben in den Laderaum 9a eingebracht werden.

In den beigefügten Figuren nicht dargestellt sind mögliche und sinnvolle andere Positionen von einigen der genannten bewegbaren Fahrzeugteile. So kann selbstverständlich das Dachteil 5 beliebige Zwischenpositionen selbstverständlich das Dachteil 5 beliebige zwischen den beiden Extrempositionen nach Figur 1, die die vollständig geschlossene Position zeigt, sowie nach Figur 2, die die vollständig geöffnete Position zeigt. einnehmen. Auch kann es gewünscht sein, bei derartigen Zwischenpositionen oder bei den beiden Extrempositionen des Dachteiles 5 einen vergrößerten Laderaum 9a zu Verfügung zu haben, so daß dann die Rückenlehne 10a abweichend von der in den Figuren 1, 2 gezeigten Position gemäß Pfeilrichtung 4a nach vorne verfahren wird. wodurch der ursprünglich viersitzige Personenkraftwagen in einen zweisitzigen Personenkraftwagen umgewandelt wird. In analoger Weise kann ausgehend von der Position nach Figur 3 die Rückenlehne 10a auch gegen Fahrtrichtung 4a nach hinten verschoben werden, wodurch man weiterhin die sogenannte Pick-Up-Version vorliegen hat, jedoch mit verkleinerter Grundfläche des Laderaumes 9a. Als Ausgleich dafür jedoch wurde aus dem in Fig. 3 gezeigten zweisitzigen Pick-Up-Fahrzeug ein viersitziges Pick-Up-Fahrzeug. Hierbei ist es -wie ersichtlich- wieder erforderlich, die Kopfstützvorrichtung 10c um einen gewissen Betrag in der Rückenlehne 10a zu versenken, da ansonsten diese Kopfstützvorrichtung 10c mit dem vorderen Abschnitt des Rahmenteiles 8 kollidieren würde.

Im übrigen kann es auch gewünscht sein, das Fließheckscheibenteil 6 ausgehend von der geschlossenen Position nach Figur 1 nur teilweise in Fahrtrichtung 4a nach vorne zu verschieben, ohne daß der in Figur 3 gezeigte Zustand erreicht wird. Hierdurch erhält man oberhalb der Heckklappe 14 einen mehr oder weniger großen Lüftungsspalt. Um nun all diese gewünschten unterschiedlichen Positionierungen der genannten bewegbaren Fahrzeug-Teile auf möglichst einfache Weise einstellen zu können, ohne hierbei irgendwelche kritischen Situationen hervorzurufen, ist die bereits beschriebene Steuereinheit vorgesehen.

Dieser Steuereinheit kann der Fahrzeugnutzer nun lediglich vorgeben, welche Version des erfindungsgemäßen Personenkraftwagens bzw. welchen End-Zustand er erreichen möchte, wonach diese Steuereinheit die entsprechenden Hilfsmotoren der jeweiligen bewegbaren Fahrzeug-Teile auf sinnvolle Weise ansteuert. Selbstverständlich sind an diesem elektrischen Hilfsmotor oder an den bewegbaren Fahrzeug-Teilen entsprechende Positionsgeber erforderlich, anhand derer die Steuereinheit erkennen kann, in welcher Position sich das jeweilige bewegbare Fahrzeug-Teil aktuell befindet.

Im wesentlichen kann dabei die Fehlerfreiheit aller Bewegungsabläufe durch sequentielle Teilbewegungen gesichert werden. So soll beispielsweise eine Bewegung des Dachteiles 5 nur dann eingeleitet werden können, wenn sich das Fließheckscheibenteil 6 in seiner geschlossenen Position (analog den Figuren 1, 2) befindet. Möglich ist jedoch auch ein paralleles Erfassen sowie Auswerten und ein dementsprechendes Steuern bzw. Regeln der einzelnen Bewegungsabläufe. So dürfen sich beispielsweise das Dachteil 5 und das Fließheckscheibenteil 6 nicht gegenseitig überholen, was durch parallele Steuerungsprozesse dynamisch sichergestellt werden kann. Dabei kann die Steuereinheit selbstverständlich auch noch weitere Randbedingungen berücksichtigen, so beispielsweise die Signale eines Regensensors oder die aktuelle Fahrgeschwindigkeit des Personenkraftwagens.

Zur einfachen Bedienbarkeit für den Fahrzeugnutzer wird vorgeschlagen, diesem möglichst wenig Bedienelemente zur Verfügung zu stellen, wobei er über diese Bedienelemente bevorzugt eine gewünschte gemeinsame Endposition der genannten bewegbaren Fahrzeug-Teile vorgeben kann. In einer bevorzugten Ausführungsform können als Bedienelemente vier Schiebeschalter oder Kippschalter (nicht gezeigt) vorgesehen sein, denen die folgenden Funktionen zugeordnet sind. Dabei besitzt ein derartiger Schiebeschalter oder Kippschalter wie üblich zwei Schaltpositionen, die im folgenden als rückwärtige Schaltposition und als vorwärtige Schaltposition bezeichnet werden, wobei im folgenden der Einfachheit halber lediglich der Begriff des Kippschalters verwendet wird:

Über einen ersten Kippschalter ist vorgebbar, ob die "Coupé-Version" nach Figur 1, die "Targa-Version" nach Figur 2 oder die "Quasi-Cabriolet-Version" nach Figur 4 gewünscht ist. Wird beispielsweise ausgehend von der Coupé-Version nach Figur 1 dieser erste Kippschalter rückwärtig betätigt, so verfährt zunächst das Dachteil 5 gegen Fahrtrichtung 4a nach hinten und gelangt in Abhängigkeit von der Zeitdauer dieser rückwärtigen Betätigung schließlich in die in Figur 2 dargestellt Position, so daß die sogenannte "Targa-Version" (Fig.2) erreicht ist.
Wird ausgehend von dieser Position nach Figur 2 der genannte erste Kippschalter vorwärtig betätigt, so schließt das Dachteil 5 wieder, d.h. es wird gemäß Fahrtrichtung 4a in die in Figur 1 gezeigte Position gefahren.

Wird hingegen ausgehend von der Position nach Figur 2 der genannte erste Kippschalter weiterhin rückwärtig betätigt, so wird die Einheit aus Rahmenteil 8, Dachteil 5 sowie Fließheckscheibenteil 6 gemäß Pfeilrichtung 13 in den Fahrzeug-Innenraum 9 verschwenkt, wonach letztendlich die in Figur 4 dargestellte "Quasi-Cabriolet-Version" erhalten wird. Selbstverständlich wird diese Verschwenkbewegung gemäß Pfeilrichtung 13 nur dann ausgeführt, wenn zuvor die Rückenlehne 10a in Fahrtrichtung 4a nach vorne verfahren wurde, wobei dieses Verfahren ausgelöst durch die Steuereinheit selbsttätig erfolgt. Aus Sicherheitsgründen kann die Steuereinheit vorher anhand einer Sitzbelegungserkennung abfragen, ob sich auf den Sitzpolstern 10b Personen oder Gegenstände befinden.
Ausgehend von der in Figur 4 gezeigten Position wird durch vorwärtige Betätigung des genannten ersten Kippschalters das Rahmenteil 8 mit dem Dachteil 5 sowie dem Fließheckscheibenteil 6 gegen Pfeilrichtung 13 wieder in die in Figur 2 gezeigte Position gebracht.

Vorgesehen sein kann ein zweiter Kippschalter, über den wählbar ist, ob ein viersitziges Fahrzeug oder ein zweisitziges Fahrzeug gewünscht ist. Hierdurch kann der Fahrzeugnutzer - unabhängig von einer Zwangsverstellung der Rückenlehne 10a - diese Rückenlehne 10a wie gewünscht positionieren, wobei bevorzugt eine vorwärtige Betätigung des Kippschalters die Rückenlehne 10a nach vorne gemäß Fahrtrichtung 4a verschiebt, während eine rückwärtige Betätigung des zweiten Kippschalters die Rückenlehne 10a gegen Fahrtrichtung 4a nach hinten verfahren läßt.

Mittels eines dritten Kippschalters kann in analoger Weise die Kopfstützvorrichtung 10c wie gewünscht positioniert werden, und zwar abermals unabhängig von Zwangspositionierungen, die von der Steuereinheit im Hinblick auf eine Kollisionsfreiheit oder Bewegungsfreiheit der genannten bewegbaren Fahrzeug-Teile vorgenommen werden.

Schließlich kann ein vierter Kippschalter vorgesehen sein, um ausgehend von der Coupé-Version nach Figur 1 die Pick-Up-Version nach Figur 3 einzustellen. Wird dieser vierte Kippschalter in Richtung Pick-Up-Version betätigt, so wird automatisch von der Steuereinheit das Fließheckscheibenteil 6 in Fahrtrichtung 4a unter das Dachteil 5 und gleichzeitig die Rückenlehne 10a der Rücksitzbank 10 in Fahrtrichtung 4a hinter die Vordersitze 11 verfahren. Wünscht anschließend der Fahrzeugnutzer ausgehend von dieser in Figur 3 gezeigten Version ein viersitziges Pick-Up-Fahrzeug, so kann er durch Betätigung des bereits genannten zweiten Kippschalters die Rücksitzbank 10 wieder gegen Fahrtrichtung 4 nach hinten verschieben.

Wie bereits erwähnt kann auch im Bereich der Heckklappe 14 eine Betätigungsvorrichtung vorgesehen sein, mit welcher der Steuereinheit zumindest für eines der genannten bewegbaren Fahrzeugteile eine gewünschte Position vorgebbar ist. Insbesondere kann an der Heckklappe 14 ein Kippschalter vorgesehen sein, der die gleiche Funktion hat wie der soeben erläuterte vierte Kippschalter, der nämlich die Umwandlung vom Coupé in ein zweisitziges Pick-Up-Fahrzeug bewirkt. Ferner kann eine Fernbedienungseinheit vorgesehen sein, mit Hilfe derer der Fahrzeugnutzer der Steuereinheit die jeweiligen Befehle auch von außerhalb des Fahrzeugs übermitteln kann.

insgesamt ermöglicht somit ein erfindungsgemäßer Personenkraftwagen eine vollkommen variable Fahrzeugnutzung zwischen den Extremen "offenes Fahrzeug", was Spaß vermittelt, und "Pick-Up", was eine Transportfunktion darstellt, wobei der Fahrzeugnutzer die automatische Umwandlung ohne aufwendige Fahrzeugumrüstung oder Umbau steuern kann. Dabei können die dargestellten Bewegungsabläufe - mit wenigen Ausnahmen - auch während des Fahrens erfolgen, wobei noch darauf hingewiesen sei, daß selbstverständlich eine Vielzahl weiterer Details insbesondere konstruktiver Art durchaus abweichend vom gezeigten Ausführungsbeispiel gestaltet sein können, ohne den Inhalt der Patentansprüche zu verlassen.

### Bezugszeichenliste:

- 1: Seitenrahmen
- 2: Türschweller
- 3: A-Säule
- 4: Fahrzeug-Längsachse
- 4a: Fahrtrichtung
- 5: Dachteil
- 6: Fließheckscheibenteil
- 7: Brüstung
- 8: Rahmenteil (Schwenkrahmen)
- 9: Fahrzeug-Innenraum
- 9a: Laderaum
- 10: Rücksitzbank
- 10a: Rückenlehne von 10
- 10b: Sitzpolster
- 10c: Kopfstützvorrichtung von 10a
- 11: Vordersitz
- 12: Schwenkachse
- 13: Pfeilrichtung : Verschwenken
- 14: Heckklappe
- 15: Pfeil: Verschwenken von 14

## Patentansprüche

1. Personenkraftwagen mit einem Fließheckscheibenteil (6), das gemeinsam mit einem dieses führende Rahmenteil (8) um eine im Fahrzeug-Heckbereich quer zur Fahrzeug-Längsachse (4) verlaufende Schwenkachse (12) in den Fahrzeug-Innenraum (9) hinein verschwenkbar ist, sowie mit einem in Richtung der Fahrzeug-Längsachse (4) verschiebbaren Dachteil (5), welches in das Rahmenteil (8) einführbar und mit dem Fließheckscheibenteil (6) zumindest im wesentlichen in Überdeckung bringbar und in diesem Zustand in den Fahrzeug-Innenraum (9) mitverschwenkbar ist,
**dadurch gekennzeichnet, daß** das Fließheckscheibenteil (6) im nicht verschwenkten Zustand zumindest teilweise aus dem Rahmenteil (8) heraus in Richtung der Fahrzeug-Längsachse (4) verschiebbar ist und hierbei mit dem Dachteil (5) zumindest teilweise in Überdeckung gelangt.

2. Personenkraftwagen nach Anspruch 1, wobei das Fließheckscheibenteil (6) und das Dachteil (5) durch Hilfsmotoren bewegt werden, **gekennzeichnet durch** eine Steuereinheit, die die Positionierung des Fließheckscheibenteils (6), des Rahmenteils (8) oder des Dachteils (5) auf ihre Bewegungsfreiheit hin überwacht.

3. Personenkraftwagen nach Anspruch 2, wobei zumindest ein Bestandteil einer Rücksitzbank (10) unterschiedlich postionierbar ist, um ausreichenden Freiraum für ein Verschwenken des Rahmenteiles (8) in den Fahrzeug-Innnenraum (9) zu schaffen,
**dadurch gekennzeichnet, daß** die Steuereinheit auch die Positionierung der Rücksitzbank (10) oder des verschiebbaren Bestandteiles hiervon auf Bewegungsfreiheit hin überwacht.

4. Personenkraftwagen nach einem der vorangegangenen Ansprüche,
**dadurch gekennzeichnet, daß** die Rückenlehne (10a) der Rücksitzbank (10) in Richtung der Fahrzeug-Längsachse (4) verschiebbar ist und daß eine an der Rückenlehne (10a) vorgesehene Kopstützvorrichtung (10c) in der Rückenlehne (10a) zumindest teilweise versenkbar ist.

5. Personenkraftwagen nach einem der vorangegangenen Ansprüche 2 bis 4,
**dadurch gekennzeichnet, daß** der Steuereinheit vorgebbar ist, welche gemeinsamen Endpositionen der bewegbaren Fahrzeug-Teile Fließheckscheibenteil (6), Rahmenteil (8), Dachteil (5), Rücksitzbank (10) oder Bestandteil derselben erreicht werden sollen.

6. Personenkraftwagen nach einem der vorangegangenen Ansprüche 2 bis 5, mit einer im Fahrzeug-Heckbereich vorgesehenen und mit dem im Rahmenteil (8) befindlichen Fließheckscheibenteil (6) zusammenwirkenden und nach außen sowie unten hin verschwenkbaren Heckklappe (14),
**dadurch gekennzeichnet, daß** im Bereich dieser Heckklappe (14) eine Betätigungsvorrichtung vorgesehen ist, mit welcher der Steuereinheit eine Position zumindest eines der genannten bewegbaren Fahrzeug-Teile vorgebbar ist.

7. Personenkraftwagen nach einem der vorangegangenen Ansprüche, 2 bis 6,
**dadurch gekennzeichnet, daß** zur Ansteuerung der Steuereinheit vier insbesondere als Kippschalter oder Schiebeschalter ausgebildete Bedienelemente vorgesehen sind, mit Hilfe derer ein Fahrzeug-Nutzer der Steuereinheit seine Wünsche übermitteln kann, wobei
über das erste Bedienelement ausgehend von der Coupe-Version des Personenkraftwagens eine Targa-Version sowie eine Quasi-Cabriolet-Version desselben herstellbar ist,
über das zweite Bedienelement die Rückenlehne (10a) der Rücksitzbank (10) wie gewünscht positionierbar ist,
über das dritte Bedienelement eine in der Rückenlehne (10a) vorgesehene Kopfstützvorrichtung (10c) wie gewünscht positionierbar ist,
über das vierte Bedienelement ausgehend von der Coupe-Version des Personenkraftwagens eine Pick-up-Version desselben herstellbar ist.

## Claims

1. A passenger motor vehicle with a fastback window section (6), which in common with a frame section (8) carrying it can be pivoted about a pivoting axis (12) running at right angles to the longitudinal axis (4) of the vehicle in the tail section of the vehicle into the internal space (9) of the vehicle, together with a roof section (5) which can be slid in the direction of the longitudinal axis (4) of the vehicle and which can be inserted into the frame section (8) and brought at least essentially to overlap the fastback window section (6) and in this condition can be pivoted together into the vehicle internal space (9),
**characterized in that** the fastback window section (6) in its non pivoted condition can be slid at least partly out of the frame section (8) in the direction of the longitudinal axis (4) of the vehicle and thereby at least partly comes to overlap the roof section (5).

2. A passenger motor vehicle according to Claim 1, whereby the fastback window section (6) and the roof section (5) are moved by auxiliary motors, **characterized by** a control unit which monitors the positioning of the fastback window section (6), the frame section (8), or of the roof section (5) for their freedom of movement.

3. A passenger motor vehicle according to claim 2, whereby at least one component of a rear bench seat (10) can be differently positioned so as to provide sufficient free space for the pivoting of the frame section (8) into the vehicle internal space (9),
**characterized in that** the control unit monitors also the positioning of the rear bench seat (10) or the moveable components of it for freedom of movement.

4. A passenger motor vehicle according to one of the foregoing claims,
**characterized in that** the back (10a) of the rear bench seat (10) can be moved in the direction of the longitudinal axis (4) of the vehicle and that a head supporting device (10c) provided on the seat back (10a) can be sunk at least partly into the seat back (10a).

5. A passenger motor vehicle according to one of the foregoing claims 2 to 4 **characterized in that** the control unit can be instructed as to which common final positions of the moveable vehicle parts: fastback window section (6), frame section (8), roof section (5), rear bench seat (10) or components of the same should be obtained.

6. A passenger motor vehicle according to one of the foregoing claims 2 to 5 with a tail flap (14) inter-working with the fastback window section (6) situated in the frame section (8) and which can be pivoted outwards as well as downwards,
**characterized in that** an operating device is positioned in the region of the tail flap (14), with which the control unit can be informed of the position of at least one of the named movable vehicle parts.

7. A passenger motor vehicle according to one of the foregoing claims 2 to 6, **characterized in that** four operating elements are provided to control the control unit configured especially as toggle switches or slide switches, with the help of which a vehicle user can transmit his wishes to the control unit,
whereby starting from the coupé version of the passenger motor vehicle a targa version and a quasi-cabriolet version of it can be produced using the first operating element,
using the second operating element the rear seat back (10a) of the rear bench seat (10) can be positioned as desired,
using the third operating element a head restraint device (10c) provided in the seat back (10a) can be positioned as desired,
using the fourth operating element, starting from the coupe version of the passenger motor vehicle a pick-up version of it can be produced.

## Revendications

1. Véhicule de tourisme comportant une lunette arrière coulissante (6) qui peut être basculée dans l'habitacle (9) du véhicule en commun avec une partie de cadre (8) guidant cette lunette arrière coulissante, par basculement autour d'un axe de pivotement (12) situé dans la partie amère du véhicule, transversalement à l'axe longitudinal (4) du véhicule, ainsi qu'un pavillon (5) coulissant dans la direction de l'axe longitudinal (4) du véhicule, et qui peut s'introduire dans la partie de cadre (8) et venir en coïncidence au moins pratiquement en partie avec la lunette arrière coulissante(6) et être basculé dans cette position avec celle-ci dans l'habitacle (9) du véhicule,
**caractérisé en ce que**
la lunette arrière coulissante (6) à l'état non basculé, peut coulisser au moins en partie hors de la partie de cadre (8) dans la direction longitudinale (4) du véhicule et arriver ainsi à chevaucher au moins partiellement le pavillon (5).

2. Véhicule de tourisme selon la revendication 1 dont la lunette arrière coulissante (6) et le pavillon (5) sont déplacés par des moteurs auxiliaires,
**caractérisé par**
une unité de commande qui surveille le positionnement de la lunette amère coulissante (6), de la partie de cadre (8) ou du pavillon (5) pour en déterminer la liberté de mouvement.

3. Véhicule de tourisme selon la revendication 2 selon lequel au moins une partie d'une banquette arrière (10) peut être positionnée différemment pour créer suffisamment d'espace libre pour basculer la partie de cadre (8) dans l'habitacle (9) du véhicule,
**caractérisé en ce que**
l'unité de commande surveille également le positionnement de la banquette arrière (10) ou de la partie coulissante de celle-ci pour en déterminer la liberté de mouvement.

4. Véhicule selon l'une quelconque des revendications précédentes,
**caractérisé en ce que**
le dossier (10a) de la banquette arrière (10) peut coulisser dans la direction de l'axe longitudinal (4) du véhicule et un dispositif d'appui-tête (10c) prévu au niveau du dossier (10a) peut être enfoncé au moins en partie dans le dossier (10a).

5. Véhicule de tourisme selon quelconque des revendications précédentes 2 à 4,
**caractérisé en ce que**
l'unité de commande prédétermine les positions de fin de course communes que doivent atteindre les parties mobiles du véhicule, à savoir la lunette arrière coulissante (6), la partie de cadre (8), le pavillon (5), la banquette arrière (10) ou des parties de celles-ci.

6. Véhicule de tourisme selon l'une quelconque des revendications précédentes 2 à 5 comportant une zone arrière et un haillon arrière (14) coopérant avec la lunette arrière coulissante (6) se trouvant dans la partie de cadre (8), le haillon pouvant basculer vers le bas,
**caractérisé en ce qu'**
au niveau du haillon (14), il est prévu un dispositif d'actionnement par lequel le dispositif de commande prédétermine une position d'au moins l'une des parties mobiles du véhicule.

7. Véhicule de tourisme selon l'une quelconque des revendications précédentes 2 à 6,
**caractérisé par**
quatre éléments de commande notamment en forme de commutateurs basculants ou coulissants pour commander l'unité de commande, à l'aide desquels l'utilisateur du véhicule peut transmettre ces demandes à l'unité de commande,
le premier élément de commande pouvant réaliser à partir de la version « coupé » du véhicule de tourisme, une version « Targa », ainsi qu'une version « quasi-Cabriolet »,
le second élément de commande permettant de positionner comme souhaité le dossier (10a) de la banquette arrière (10),
le troisième élément de commande pouvant positionner comme souhaité un dispositif d'appui-tête (10c) équipant le dossier (10a), et
le quatrième élément de commande pouvant réaliser une version « Pick-Up » à partir de la version « Coupé » du véhicule de tourisme.
